# EUROPÄISCHE PATENTANMELDUNG

(11) **EP 2 810 899 A1**
(43) Veröffentlichungstag der Anmeldung: **10.12.2014**
(21) Anmeldenummer: 14171165.5
(22) Anmeldetag: 04.06.2014
(51) Int. Cl.: B65D 90/02, B65G 53/52

(54) **Behältnis für mit Feststoffen belastete flüssige Medien und Verfahren zum Entfernen von Ablagerungen in Flüssigkeitsbehältnissen**

(30) Priorität: 04.06.2013 DE 102013105715
(71) Anmelder: Gillengerten, Frank, 51147 Köln (DE)
(72) Erfinder: Gillengerten, Frank, 51147 Köln (DE)
(74) Vertreter: Patentanwälte Dr. Solf & Zapf

(57) **Zusammenfassung**

Die vorliegende Erfindung betrifft ein Behältnis (1) für mit Feststoffen belastete flüssige Medien, insbesondere Flüssigkeiten, umfassend zumindest eine Behältniswandung (2) eines das flüssige Medium aufnehmenden Behältnisinnenraumes. Die Behältniswandung (2) weist an ihrer dem Behältnisinnenraum zugekehrten Innenseite ein elastisch verformbares, die Behältniswandung (2) zumindest teilweise vollständig abdeckendes Auskleidungsprofil (4) auf, das mit der Behältniswandung (2) einen geschlossenen Druckraum (5) einschließt. In dem Druckraum (5) mündet mindestens ein Anschluss (6) zum Verbinden mit einem Druckerzeuger für ein Druckmedium. Weiterhin betrifft die Erfindung ein Verfahren zum Entfernen von Ablagerungen in Flüssigkeitsbehältnissen unter Verwendung eines solchen Behältnisses.

## Beschreibung

Die vorliegende Erfindung betrifft ein Behältnis für mit Feststoffen belastete flüssige Medien, insbesondere Flüssigkeiten, insbesondere eine Rohrleitung oder einen Behälter sowie ein Verfahren zum Entfernen von Ablagerungen in Flüssigkeitsbehältnissen.

Ablagerungen in Rohrleitungen und Behältnissen, die Flüssigkeiten führen bzw. Flüssigkeiten enthalten, die mit Feststoffen belastet sind, führen insbesondere bei industriellen Anwendungen zu erheblichen Schäden durch die notwendige Reinigung oder durch Ersatz unbrauchbar gewordener Rohrleitungen und Behältnisse. Insbesondere kommt es zu erheblichen Belastungen für die Umwelt, wenn derartige Rohrleitungen und Behältnisse mit Hilfe von Chemikalien behandelt werden müssen, um Ablagerungen, wie sie zum Beispiel von Härtebildnern verursacht werden, zu beseitigen bzw. zu verhindern.

Der vorliegenden Erfindung liegt die Aufgabe zu Grunde, ein Behältnis der eingangs beschriebenen Art sowie ein Verfahren zur Beseitigung von Ablagerungen an den Wänden von Rohrleitungen und anderen Behältnissen zu schaffen, wobei ohne den Einsatz von Chemikalien Ablagerungen an den Rohrleitungswänden oder Behältniswänden entfernt oder verhindert werden können.

Erfindungsgemäß wird dies mit einem Behältnis der eingangs beschriebenen Art erreicht, das zumindest eine Behältniswandung eines das flüssige Medium aufnehmenden Behältnisinnenraumes aufweist, wobei die Behältniswandung an ihrer dem Behältnisinnenraum zugekehrten Innenseite ein elastisch verformbares, die Behältniswandung zumindest teilweise vollständig abdeckendes Auskleidungsprofil besitzt, das mit der Behältniswandung einen geschlossenen Druckraum einschließt, wobei in dem Druckraum mindestens ein Anschluss zum Verbinden mit einer Druckerzeugungsvorrichtung für ein Druckmedium mündet. Dieses Behältnis ist für ein Verfahren zum Entfernen von Ablagerungen in dem Behältnisinnenraum geeignet, wobei zunächst in den Druckraum ein Druckmedium mit einem Druck eingefüllt wird, der einem Innendruck einer im Innenraum des Auskleidungsprofils bestehenden Innendrucks entspricht, und danach in bestimmten zeitlichen Abständen stoßartige Druckveränderungen im Druckraum erzeugt werden, die eine elastische Verformung des Auskleidungsprofils im Bereich seiner druckbeaufschlagten Wandung derart bewirken, dass durch die elastische Verformung ein Absprengen von Ablagerungen im Bereich der druckbeaufschlagten Wandung erfolgt.

Erfindungsgemäß ist es zweckmäßig, wenn zwischen der Behältniswandung und dem Auskleidungsprofil innerhalb des Druckraums Abstandsprofile derart angeordnet sind, dass der Druckraum in einzelne Druckkammern unterteilt ist. Hierbei kann es erfindungsgemäß zweckmäßig sein, wenn einzelne oder alle Druckkammern untereinander durch Verbindungsöffnungen verbunden sind. Erfindungsgemäß kann es weiterhin von Vorteil sein, wenn in jede der Druckkammern ein Anschluss zum Zuführen des Druckmediums mündet. Erfindungsgemäß ist es vorteilhaft, wenn in allen Druckkammern der gleiche Druck vorhanden ist, so dass eine Abdichtung der Druckkammern gegeneinander nicht erforderlich ist. Weiterhin kann es von Vorteil sein, wenn die Abstandsprofile einen Abstand d zwischen dem Auskleidungsprofil und der Behältniswandung definieren, der insbesondere für alle Druckkammern gleich groß ist. Die in der Druckkammer bzw. den Druckkammern erzeugten Druckveränderungen können entweder durch Erzeugung eines Überdrucks, d. h. einer Druckerhöhung, oder eines Unterdrucks, d. h. einer Druckreduzierung, des Druckmediums gegenüber dem Innendruck im Auskleidungsprofil hergestellt werden. Wesentlich ist erfindungsgemäß, dass eine hinreichende mechanische Verformung der Wandung des Auskleidungsprofil durch die Druckveränderung erreicht wird, so dass die an der Innenseite des Auskleidungsprofils befindlichen Ablagerungen aufgrund der mechanischen Verformung der Wandung abgelöst bzw. abgesprengt werden.

Weiterhin ist es zweckmäßig, insbesondere wenn in Rohrleitungen Ablagerungen verhindert werden soll, wenn das erfindungsgemäße Behältnis eine Behältniswandung aufweist, die von einem umfangsgemäß geschlossenen, rohrförmigen Wandungsprofil gebildet wird und das Auskleidungsprofil rohrförmig ist, wobei das Auskleidungsprofil koaxial im Innern des rohrförmigen Profils angeordnet ist. Zweckmäßigerweise ist das rohrförmige Wandungsprofil und das rohrförmige Auskleidungsprofil jeweils an den jeweiligen Profilenden des Auskleidungsprofils gegeneinander abgedichtet. Insbesondere ist hierbei eine ringförmige Ausbildung der Druckkammern vorteilhaft.

Alternativ kann die Behältniswandung auch Teil eines Flüssigkeitsbehälters sein, und das Auskleidungsprofil verläuft in diesem Fall parallel zur Behältniswandung.

Erfindungsgemäß ist es zweckmäßig, wenn die Abstandsprofile an dem Auskleidungsprofil und/oder der Behältniswandung befestigt sind. Eine einfache Montage ergibt sich, wenn die Abstandsprofile erfindungsgemäß einstückig mit dem Auskleidungsprofil oder der Behältniswandung ausgebildet sind.

Es liegt ebenfalls im Rahmen der Erfindung, wenn die Abstandsprofile als separate Profile zwischen der Behältniswandung und dem Auskleidungsprofil angeordnet sind. Hierbei kann sich auch eine Ausbildung der Abstandsprofile im Rahmen eines Tragkörpers als zweckmäßig erweisen, so dass die Abstandsprofile jeweils untereinander verbunden sind.

Erfindungsgemäß ist es bei der Verwendung des erfindungsgemäßen Behältnisses vorteilhaft, wenn der Innendruck mittels einer Druckmesseinrichtung gemessen und der gemessene Druck an eine Steuerung, insbesondere elektrische Steuereinrichtung übertragen wird, die entsprechend dem gemessenen Innendruck im Auskleidungsprofil einen Druckerzeuger ansteuert, um im Druckraum einen Druck entsprechend dem Innendruck zu erzeugen und anschließend stoßartige Druckerhöhungen und/oder Druckverringerungen gegenüber dem Ausgangsdruck im Druckraum derart zu erzeugen, dass aufgrund elastischer Verformung der Wandung der Auskleidungskörper von Ablagerungen befreit wird.

Vorteilhafte Ausführungen der Erfindung sind in den Unteransprüchen enthalten sowie in den auf ein Verfahren gerichteten Ansprüchen. Anhand der in den beiliegenden Zeichnungen dargestellten Ausführungsbeispiele wird die Erfindung näher erläutert. Es zeigen:
- Fig. 1: einen Querschnitt durch ein rohrförmiges erfindungsgemäßes Behältnis,
- Fig. 2: einen Teillängsschnitt durch ein erfindungsgemäßes Behältnis mit zugehöriger Druckerzeugungseinrichtung,
- Fig. 3: einen Teilschnitt gemäß A in Fig. 2 und
- Fig. 4: eine weitere Ausführungsform eines Auskleidungsprofils gemäß der Erfindung.

In den verschiedenen Figuren der Zeichnung sind gleiche bzw. funktionsgleicheTeile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Merkmalskombinationen und Rückbeziehungen der Ansprüche eine erfinderische Bedeutung haben.

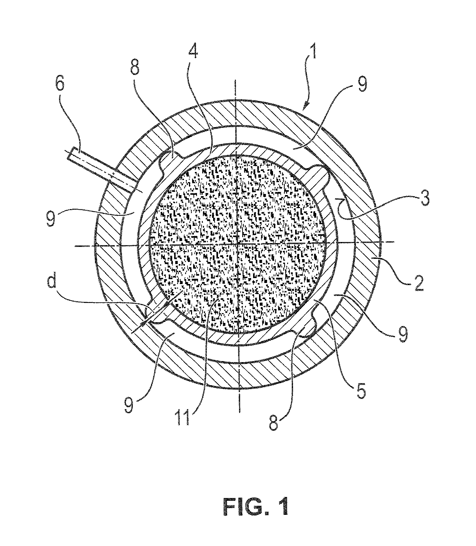

In Fig. 1 ist ein erstes Ausführungsbeispiel eines erfindungsgemäßen Behältnisses dargestellt. Dieses Behältnis 1 umfasst grundsätzlich eine Behältniswandung 2. An ihrer einem Behältnisinnenraum zugekehrten Innenseite 3 ist ein elastisch verformbares Auskleidungsprofil 4 angeordnet. Zwischen der Behältniswandung 2 und dem Auskleidungsprofil 4 ist ein Druckraum 5 eingeschlossen. An dem Druckraum 5 ist durch die Behältniswandung 2 hindurch ein Druckmedium-Anschluss 6 angeordnet. Der Druckraum 5 kann vorteilhafterweise durch in ihm angeordnete Abstandsprofile 8 in mehrere Druckkammern 9 unterteilt sein. Vorteilhafterweise können die Druckkammern 9 untereinander durch Durchgangsöffnungen 10 miteinander verbunden sein.

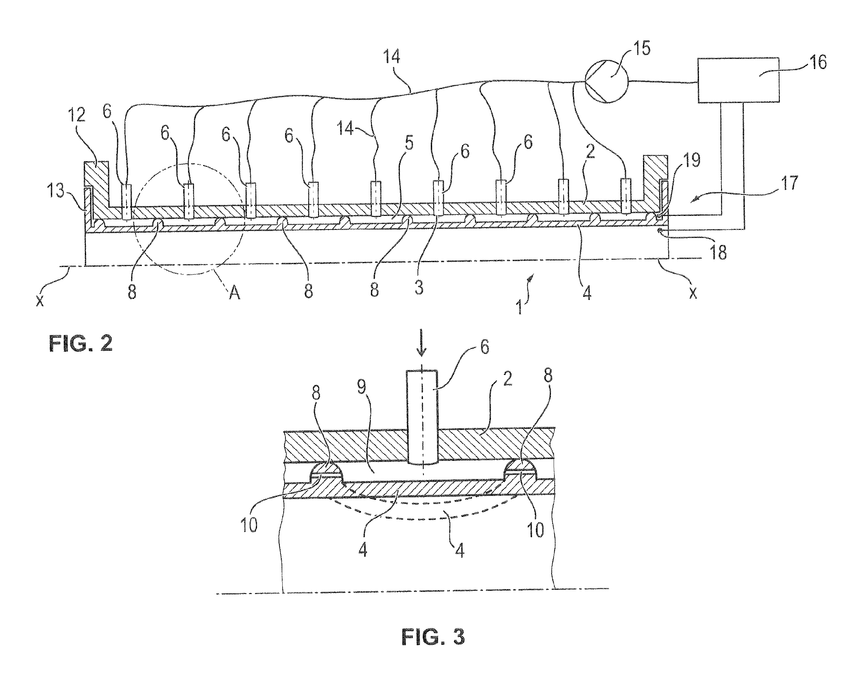

Im Ausführungsbeispiel gemäß Fig. 1 weist das Behältnis 1 eine rohrförmige, umfangsgemäß geschlossene Behältniswandung 2 auf, wobei zum Beispiel das Behältnis 1 einen kreisförmigen Querschnitt besitzt. Das im Innern angeordnete Auskleidungsprofil 4 ist ebenfalls rohrförmig mit einem kreisförmigen Querschnitt ausgebildet und verläuft koaxial zum Behältnis 1. Zwischen der Behältniswandung 2 und dem Auskleidungsprofil 4 sind zum Beispiel im dargestellten Ausführungsbeispiel in dem Druckraum 5 vier Abstandsprofile 8 jeweils um 90° zueinander versetzt angeordnet. Diese Abstandsprofile 8 definieren einen Abstand d zwischen dem Auskleidungsprofil 4 und der Behältniswandung 2, der durch die Höhe des Druckraums 5 bestimmt wird. Die Abstandsprofile 8 können parallel zur Längsachse X-X des rohrförmigen Behältnisses 1 verlaufen, jedoch ist es auch zum Beispiel möglich, einen ringförmigen oder spiralförmigen radialen Verlauf am Umfang des Auskleidungsprofils 4 vorzusehen. Durch die vier Abstandsprofile 8 wird der Druckraum 5 in vier Druckkammern 9 unterteilt, die - wie in Fig. 3 gezeigt ist - durch die Durchgangsöffnungen 10 miteinander verbunden sind. Diese Durchgangsöffnungen 10 verlaufen durch die Abstandsprofile 8 hindurch. Bevorzugt ist jedoch, die Druckkammern 9 voneinander zu trennen.

In Fig. 1 ist gezeigt, dass ein Druckmedium-Anschluss 6 vorgesehen ist, der in einer Druckkammer 9 mündet. Vorteilhafterweise mündet jedoch in jeder Druckkammer 9 ein Druckmedium-Anschluss 6. Die Anzahl der Druckmedium-Anschlüsse 6 kann von der Größe des Querschnitts des Behältnisses 1 abhängen. Ein im Innenraum des Auskleidungsprofils 4 strömendes Medium, insbesondere eine mit Verunreinigung belastete Flüssigkeit, ist punktiert eingezeichnet und mit dem Bezugszeichen 11 gekennzeichnet. Die Abstandsprofile 8 sind zum Beispiel einstückig mit dem Auskleidungsprofil 4 verbunden und sind vorzugsweise gleich groß. Die Abstandsprofile 8 können auch unabhängig von der jeweiligen Ausführung des erfindungsgemäßen Behältnisses 1 einstückig mit der Behältniswandung 2 ausgebildet sein oder aber als separates Teil, das zwischen die Behältniswandung 2 und dem Auskleidungsprofil 4 eingeschoben wird. Bei einem derartigen separaten Bauteil können die Abstandsprofile 8 beispielsweise untereinander durch Verbindungsstege verbunden sein, so dass sich eine Art korbmäßige Ausbildung ergibt.

In Figur 2 ist ein Längsschnitt in Teilansicht durch ein erfindungsgemäßes rohrförmiges Behältnis 1 und ein rohrförmiges Auskleidungsprofil 4 dargestellt. Hierbei sind beispielsweise die Abstandsprofile 8 ringförmig in gleichen Abständen entlang der Längsachse X-X des Behältnisses 1 am Umfang des Auskleidungsprofils 4 angeordnet und bilden zwischen sich ringförmige Druckkammern 9 aus, die gemeinsam den Druckraum 5 bilden und um eine Längsachse des Behältnisses 1 herum verlaufen. In dem Ausführungsbeispiel mündet in jeder Druckkammer 9 ein Druckmedium-Anschluss 6. An ihren Enden sind die rohrförmige Behältniswandung 2 und das rohrförmige Auskleidungsprofil 4 jeweils abgedichtet, zum Beispiel durch flanschförmige Fortsätze 12, 13, die miteinander verbunden sind, so dass ein geschlossener, dichter Druckraum 5 gebildet ist.

Die Druckmedium-Anschlüsse 6 sind jeweils über Verbindungsleitungen 14 mit einem Druckerzeuger 15, zum Beispiel einem Kompressor oder dergleichen, verbunden, der über eine elektronische Steuereinheit 16 gesteuert wird. Die Steuereinheit 16 ist mit einer Druckmesseinrichtung 17 verbunden, die über Drucksensoren 18, 19 den jeweiligen Druck P_{d} im Druckraum 5 und den Innendruck Pᵢ im Innenraum des Auskleidungsprofils 4 misst.

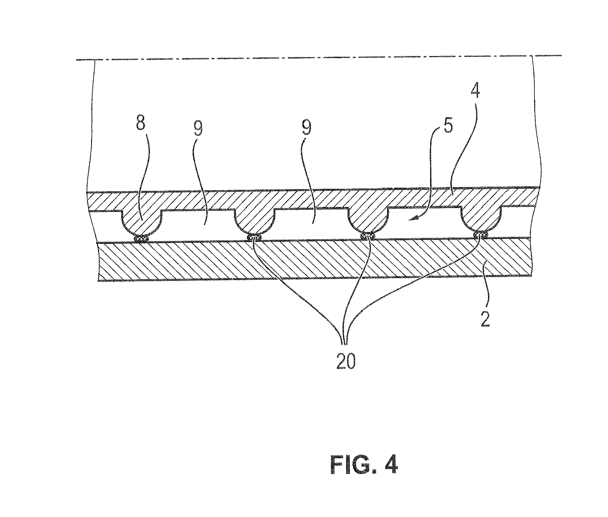

In Figur 4 ist eine alternative Ausführungsform des erfindungsgemäßen Behältnisses im Teilschnitt dargestellt. Hierbei ist dargestellt, dass ein erfindungsgemäßes Behältnis 1 auch als Behälter ausgeführt werden kann, dessen Wandung beispielsweise aus mindestens einem ebenen Abschnitt besteht, wobei die Behältniswandung 2 plattenförmig ausgebildet ist und das Auskleidungsprofil 4 ebenfalls plattenförmig ist und parallel zur Behältniswandung 2 verläuft. Zwischen dem Auskleidungsprofil 4 und der Behältniswandung 2 sind die Abstandsprofile 8 angeordnet. Im dargestellten Ausführungsbeispiel sind beispielsweise die einstückig an dem Auskleidungsprofil 4 ausgebildeten Abstandshalter 8 mit der Behältniswandung 2 fest verbunden, beispielsweise durch eine Klebeverbindung 20. Erfindungsgemäß ist es möglich, ein Behältnis mit diesem prinzipiellen beschriebenen Aufbau grundsätzlich in jeder beliebigen Form herzustellen. Die Behältniswandung 2 und das Auskleidungsprofil 4 sind in ihrem umlaufenden Randbereichen miteinander dicht, d. h. druck- und mediendicht verbunden.

Im regulären Betrieb eines erfindungsgemäßen Behältnisses 1 weist dieses, beispielsweise wenn es als Rohrleitung - wie in Fig. 1 und 2 dargestellt - betrieben wird, ein flüssiges Medium im Behältnisinnenraum, d. h. innerhalb des Auskleidungsprofils 4 auf, das durch das Auskleidungsprofil 4 hindurchströmt. Dabei ist innerhalb des Auskleidungsprofils 4 der Innendruck Pᵢ vorhanden, der mittels der Druck-Messeinrichtung 17 über den vorhandenen Messsensor 18 gemessen wird. Der gemessene Innendruck Pᵢ wird in der Steuereinheit 16 gespeichert. Die Steuereinheit 16 steuert die Druckerzeugungseinrichtung, beispielsweise eine Flüssigkeitspumpe an, und diese füllt den Druckraum 5 bzw. die einzelnen Druckkammern 9 zwischen dem Auskleidungsprofil 4 und der Behältniswandung 2 so weit mit einem Druckmedium, beispielsweise einer Flüssigkeit oder einem Gas an, dass im Druckraum 5 bzw. den Druckkammern 9 der gleiche Druck P_{d} herrscht wie im Innenraum des Auskleidungsprofils 4. Über die Steuereinrichtung erfolgt nun in individuell festzulegenden zeitlichen Abständen eine Ansteuerung des Druckerzeugers 15 derart, dass Druckstöße im Druckraum 5 erzeugt werden, wobei diese Druckstöße durch den Aufbau eines Überdrucks, d. h. einer Druckerhöhung, und/oder aber auch den Aufbau eines Unterdrucks, d. h. einer Druckreduzierung, im Druckraum 5 gegenüber dem Innendruck im Auskleidungsprofil 4 erzeugt werden können. Diese Druckstöße bewirken ein Ausdehnen bzw. ein Wölben der Wandung des Auskleidungsprofils 4, wie das beispielsweise in Fig. 3 durch den gestrichelten Verlauf der Wandung dargestellt ist. Hierbei ist das Auskleidungsprofil 4 materialmäßig derart ausgebildet, dass immer wieder eine elastische Rückstellung erfolgt. Durch diese Auswölbung der Wandung - und zwar bevorzugt jeweils zwischen den Abstandshaltern 8 - werden an der Innenseite des Auskleidungsprofils 4 vorhandene Ablagerungen abgesprengt und können mit dem zu fördernden Medium herausgetragen werden. Das Auskleidungsprofil 4 wird aus einem elastischen, insbesondere Kunststoffmaterial hergestellt, welches zudem widerstandsfähig gegenüber dem durchströmenden Medium ist und darüber hinaus über eine lange Lebensdauer verfügt. Ein geeignetes Material kann beispielsweise ein gummielastisches Material sein.

Insbesondere erfolgt eine Druckreduzierung in den einzelnen Druckkammern 9 über die in den Druckkammern 9 mündenden Druckmedium-Anschlüsse 6. Da in den einzelnen Druckkammern 9 der gleiche Druck vorhanden ist, ist eine Abdichtung der Druckkammern 9 gegeneinander nicht erforderlich. Indem in jeder Druckkammer 9 ein eigener Druckmedium-Anschluss 6 vorhanden ist, erfolgt eine schnelle, zeitgleiche Befüllung bzw. Entleerung der Druckkammern 9. Bei sehr langen "Förderleitungen" kann es auch zweckmäßig sein, die Druckkammern 9 über die Leitungslänge abschnittsweise unterschiedlich druckmäßig anzusteuern. Auch ist es möglich, die Druckkammern 9 abwechselnd mit Unterdruck und Überdruck zu beaufschlagen.

Das erfindungsgemäße Behältnis 1 kann sowohl für kleine als auch für große oder mittlere Rohrleitungsdurchmesser ausgebildet sein. Es können auch Bögen von dem erfindungsgemäßen Behältnis gebildet werden.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im jeweiligen unabhängigen Anspruch definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Behältnis (1) für mit Feststoffen belastete flüssige Medien, insbesondere Flüssigkeiten, umfassend zumindest eine Behältniswandung (2) eines das flüssige Medium aufnehmenden Behältnisinnenraumes,
**dadurch gekennzeichnet, dass** die Behältniswandung (2) an ihrer dem Behältnisinnenraum zugekehrten Innenseite ein elastisch verformbares, die Behältniswandung (2) zumindest teilweise vollständig abdeckendes Auskleidungsprofil (4) aufweist, das mit der Behältniswandung (2) einen geschlossenen Druckraum (5) einschließt, wobei in dem Druckraum (5) mindestens ein Anschluss (6) zum Verbinden mit einem Druckerzeuger (15) für ein Druckmedium mündet.

2. Behältnis nach Anspruch 1,
**dadurch gekennzeichnet, dass** zwischen der Behältniswandung (2) und dem Auskleidungsprofil (4) innerhalb des Druckraums (5) Abstandsprofile (8) derart angeordnet sind, dass der Druckraum (5) in einzelne Druckkammern (9) unterteilt ist.

3. Behältnis nach Anspruch 2,
**dadurch gekennzeichnet, dass** einzelne oder alle Druckkammern (9) untereinander durch Durchgangsöffnungen (10) verbunden sind.

4. Behältnis nach einem der Ansprüche 1 bis 3,
**dadurch gekennzeichnet, dass** die Abstandsprofile (8) einen Abstand (d) zwischen dem Auskleidungsprofil (4) und der Behältniswandung (2) definieren, der bei allen Druckkammern (9) insbesondere gleich groß ist.

5. Behältnis nach einem der Ansprüche 1 bis 4,
**dadurch gekennzeichnet, dass** die Behältniswandung (2) von einem umfangsgemäß geschlossenen, rohrförmigen Wandungsprofil gebildet wird, und das Auskleidungsprofil (4) rohrförmig ist, und koaxial im Innern des rohrförmigen Wandungsprofils (2) angeordnet ist.

6. Behältnis nach Anspruch 5,
**dadurch gekennzeichnet, dass** das rohrförmige Wandungsprofil (2) und das rohrförmige Auskleidungsprofil (4) an den jeweiligen Profilenden des Auskleidungsprofils (4) und/oder des Wandungsprofils (2) abgedichtet sind.

7. Behältnis nach einem der Ansprüche 1 bis 4,
**dadurch gekennzeichnet, dass** die Behältniswandung (2) Teil eines Flüssigkeitsbehälters ist und das Auskleidungsprofil (4) parallel zur Behältniswandung (2) verläuft und die Behältniswandung (2) und das Auskleidungsprofil (4) an ihren umlaufenden Wandungsseiten miteinander dichtend verbunden sind.

8. Behältnis nach einem der Ansprüche 2 bis 7,
**dadurch gekennzeichnet, dass** die Abstandsprofile (8) an dem Auskleidungsprofil (4) und/oder der Behältniswandung (2) angeformt sind.

9. Behältnis nach Anspruch 8,
**dadurch gekennzeichnet, dass** die Abstandsprofile (8) mit dem Auskleidungsprofil (4) oder der Behältniswandung (2) beispielsweise durch eine Klebeschicht 20 verbunden sind.

10. Behältnis nach einem der Ansprüche 1 bis 7,
**dadurch gekennzeichnet, dass** die Abstandsprofile (8) als separater Profilkörper zwischen der Behältniswandung (2) und dem Auskleidungsprofil (4) angeordnet sind.

11. Behältnis nach einem der Ansprüche 2 bis 10,
**dadurch gekennzeichnet, dass** das Behältnis (1) rohrförmig und das Auskleidungsprofil (4) rohrförmig ausgebildet sind, und die Druckkammern (9) ringförmig um eine Längsachse des Behältnisses (1) verlaufen.

12. Behältnis nach einem der Ansprüche 2 bis 11,
**dadurch gekennzeichnet, dass** in jeder Druckkammer (9) ein separater Druckmedium-Anschluss (6) vorgesehen ist.

13. Verfahren zum Entfernen von Ablagerungen in Flüssigkeitsbehältnissen unter Verwendung eines Behältnisses nach einem der Ansprüche 1 bis 12,
**dadurch gekennzeichnet, dass** zunächst in den Druckraum (5) ein Druckmedium mit einem Druck (P_{d}) eingefüllt wird, der einem Innendruck (Pᵢ) im Innenraum des Auskleidungsprofils (4) entspricht und danach in bestimmten zeitlichen Abständen stoßartige Druckveränderungen im Druckraum (5) erzeugt werden, die eine elastische Verformung des Auskleidungsprofils (4) im Bereich seiner druckbeaufschlagten Wandung derart bewirken, dass durch die elastische Verformung ein Absprengen von Ablagerungen im Bereich der Druckbeaufschlagung erfolgt.

14. Verfahren nach Anspruch 13,
**dadurch gekennzeichnet, dass** die Druckänderungen durch Erzeugung einer Druckerhöhung oder einer Druckreduzierung des Druckmediums im Druckraum (5) gegenüber dem Innendruck (Pᵢ) im Auskleidungsprofil (4) erzeugt werden.

15. Verfahren nach Anspruch 13 oder 14,
**dadurch gekennzeichnet, dass** der Innendruck (Pᵢ) mittels einer Druckmesseinrichtung (17) gemessen und der gemessene Druckwert an eine Steuerungseinheit (16) übertragen wird, die entsprechend dem gemessenen Druck einen Druckerzeuger (15) ansteuert, um im Druckraum (5) einen Druck (P_{d}) entsprechend dem Innendruck (Pᵢ) aufzubauen und anschließend in wählbaren Abständen stoßartige Druckerhöhungen und/oder Druckverringerungen gegenüber dem Druck (P_{d}) derart zu erzeugen, dass aufgrund der Druckveränderungen eine Verformung der Wandung des Auskleidungsprofils (4) derart erfolgt, dass darauf befindliche Ablagerungen abgelöst werden.
